# EUROPEAN PATENT APPLICATION

(11) **EP 4 303 115 A1**
(43) Date of publication of application: **10.01.2024**
(21) Application number: 22183866.7
(22) Date of filing: 08.07.2022
(51) Int. Cl.: B63H 9/061

(54) **WINGSAIL STRUCTURE FOR A WIND-ASSISTED PROPULSION ARRANGEMENT FOR A MARINE VESSEL**

(71) Applicant: AlfaWall Oceanbird AB, 147 80 Tumba (SE)
(72) Inventor: ALVÁN, Jonas, SE-167 64 BROMMA (SE); EDSTRÖM, Annika, SE-135 63 TYRESÖ (SE); RAZOLA, Mikael, SE-132 37 SALTSJÖ-BOO (SE); FRIDSELL, Magnus, SE-147 80 TUMBA (SE)
(74) Representative: Alfa Laval Attorneys

(57) **Abstract**

The present invention relates to a wingsail structure (100) for a wind-assisted propulsion arrangement (10) of a marine vessel (1). The wingsail structure (100) comprises a wingsail frame (101) comprising a rigid or semi-rigid main wingsail (110) and flap (120) having an airfoil shape, and at least one upper and lower coupling member (130; 140) connecting the main wingsail and the flap. The wingsail structure further comprises a foundation (20) arranged to be fixed to a body (3) of the vessel (1) and the wingsail frame is rotatable in respect to the foundation. The flap (120) is rotatable around a second longitudinal axis of rotation to bring the flap and the flap centerline (FCL) thereof in an inclined position in respect to the main wingsail centerline (MCL). The second axis of rotation is arranged laterally offset of the main wingsail centerline (MCL). In this way only one rotation axis is needed for inclining the flap.

## Description

### TECHNICAL FIELD

The present disclosure relates to a wingsail structure for a wind-assisted propulsion arrangement of a marine vessel and to a method of operating a wind-assisted propulsion arrangement comprising the wingsail structure as defined in the appended claims.

### BACKGROUND

Sails have been known for a long time as means of propulsion of ships. Traditionally, flexible sails have been mounted on masts to harness the power of wind and propel the ship. The modern merchant vessels commonly use fossil fuels and combustion engines to propel the vessel. Use of wind propulsion has been suggested to reduce the overall consumption of fossil fuels. For this purpose, rigid sails can be used. The amount of power being generated is related to a large number of interlinked factors, but wing area and other geometric aerodynamic characteristics are primary performance indicators. A possible geometric setup can be achieved by combining a main wing with a flap that can generate a large propulsive force given the wing size, compared to a wing without a flap. High efficiency wingsail arrangement and structure that can generate a large amount of propulsive force given its absolute size can be obtained for example by adjusting a camber formed by the main wingsail and the flap. When aerodynamic propulsive force from the wingsails is not desired or the force should be limited, the vessel stability, vessel safety and operability should be taken into consideration. This adds complexity and challenges in using rigid wingsails as ship propulsors. In addition to this, the vessel performance is related to the prevailing wind strengths and directions. Due to the statistical distribution of for example wind strength, it is clear that during the majority of time the wind speed is fairly moderate. Therefore, the wing characteristics should be configured so that the wingsail can utilize low wind speeds and at the same time be able to cope with more rarely occurring high wind speeds in a safe manner.

The use of rigid sails has been discussed in the prior art. For example, US10906620B2 discloses a reefable double airfoil, having shape members for the respective fore and aft flap, which are traversed by a fore mast while being able to turn around an axis defined thereby. In a variant, the flaps are constructed as rigid boxes, which can be telescopically nested in series.

US10906620B2 also discloses in a variant a reefable double airfoil, in which the fore and aft airfoils consist of rigid boxes which are traversed by a respective mast. The airfoils, around which they can rotate and be reefed. The rigid airfoils can thus be reefed, that is, be brought to a non-propulsive position, by telescopically collapsing the airfoil along the mast. However, the telescopic nesting may lead to wear of the boxes and this in turn may lead to problems with fit of the boxes when nesting the boxes. In case of damage to the boxes, it may be difficult to retract the sail whereby the construction may be subject to forces exerted by the wind when propulsion by the wingsail is not desired.

Even though known rigid wingsail solutions exist, there is still room for improvements.

### SUMMARY OF THE INVENTION

In context of the present invention, it has been noted that reefing of large rigid or semi-rigid wingsails is demanding. It has been realized that there is a problem in finding a suitable way or reefing and stowing the wingsails when they are not used onboard of a marine vessel, due to a height and large total area of such rigid wingsails.

In view of the disadvantages and limitations with the prior art solutions, it is an aim with the present invention to provide a marine vessel with a wind-assisted propulsion arrangement, which at least partially solves the problems with the known solutions especially relating to robustness of the wingsail structures, arrangement of the wingsail structure in a neutral non-propulsive position in a robust and space-saving manner, and easy maintenance and service of the wingsail structures.

It has been noted that in connection with large rigid wingsails, it may be advantageous that traditional masts are not used when reefing. Instead, the wingsails are arranged to be tilted to a non-propulsive position. However, due to a large size of the wingsails, it should be assured that the wingsails can be stowed in a compact manner when they are in the non-propulsive position, for example when the vessel is docked. Additionally, the structure of the wingsails need to be reinforced in a proper way to provide a robust construction.

The above objectives are attained by the present invention as defined in the appended independent claims.

The present invention thus relates to a wingsail structure for a wind-assisted propulsion arrangement of a marine vessel and comprises a wingsail frame, which is rotatably connected via a first longitudinal axis of rotation to a foundation. The wingsail frame comprises a main wingsail and an aft flap, each having an airfoil shape and comprising rigid or semi-rigid sidewalls extending between a top end and a bottom end and having a leading edge and a trailing edge. The main wingsail has a main wingsail centerline and the aft flap has a flap centerline, which centerlines extend in a cross-sectional view between the respective leading edges and trailing edges. The wingsail frame further comprises at least one coupling member connecting the main wingsail and the aft flap. The flap is arranged rotatable around a second longitudinal axis of rotation to bring the flap and the flap centerline thereof to an inclined position in respect of the main wingsail centerline. The second axis of rotation is arranged laterally offset of the main wingsail centerline. Similarly, the second axis of rotation can be arranged laterally offset of the flap centerline. Additionally, the second axis of rotation may be connected to the at least one coupling member.

By the present construction, several advantages can be obtained. Since the second axis of rotation is arranged laterally offset of the main wingsail centerline, it is possible to bring the flap in close proximity of the main wingsail when the flap is folded towards the main wingsail. In this way, space required during folding can be reduced. Additionally, only one point of rotation is needed for the inclination of the flap in respect of the main wingsail. Further, when the second axis of rotation is connected to the at least one coupling member, the structure will be robust and simple.

Each of the main wingsail and the aft flap may further comprise a longitudinally along the length of the respective main wingsail and aft flap extending supporting frame. The supporting frame may be arranged inside the respective main wingsail and flap, whereby the supporting frame may be located mainly within the sidewalls of the respective main wingsail and the flap. However, the supporting frame may extend outside the extension of the sidewalls for example at the end and bottom parts of the main wingsail and the flap. The supporting frames provide structural stability for the wingsail frame.

Each of the supporting frames may have a hollow structure and may be connected to an inner surface of the side wall of the respective main wingsail and the flap. The hollow structure provides for reduced weight for the frame and for less rigid construction. Thus, the frame will have a certain degree of flexibility.

The at least one coupling member may be fixed to the respective frame structure of the main wingsail and the flap. In this way a more robust construction can be provided.

The at least one coupling member may be associated with the respective bottom end and/or top end of the main wingsail and the flap. The coupling member may comprise a first boom member, which is connected to the flap, and a second boom member, which is connected to the main wingsail. The first boom member and second boom member may be connected to each other via the second axis of rotation. In this way the second axis of rotation provides a hinged connection between the boom members, whereby only one rotation axis to incline the flap in respect of the main wingsail can be provided in a robust manner.

The first boom member and the second boom member may be fixed to the respective frame structure of the flap and the main wingsail in a non-rotatable manner. The rotation of the flap in respect of the main wingsail can be provided by the second axis of rotation. Thus, a robust construction is provided.

The flap may be configured to be rotatable in respect to the main wingsail by means of movable lever arms movably fixed to the first and second boom members. The movable lever arms are driven by means of at least one linear actuator or motor. The linear actuator may comprise for example a hydraulic cylinder.

Each of the bottom end and/or the top end of the main wingsail and the flap may comprise a respective bottom end cover plate and/or top end cover plate. The cover plates may have an outer periphery that extends at least partially over the periphery of the sidewalls of the respective main wingsail and the flap. The cover plates may be used for the control of the air flow and to prevent turbulence. The second axis of rotation may be connected to the bottom end plate and/or the top end plate of the main wingsail and it may be located laterally outside of an area defined by the sidewalls of the main wingsail and the flap. The supporting frames of the main wingsail and the flap may be connected to the respective bottom and/or top cover plates.

The wingsail structure may be configured such that the flap can be inclined to a neutral position, in which the flap centerline is aligned with the main wingsail centerline, and/or to a propulsive position), in which the flap centerline is inclined in respect to the main wingsail centerline, and/or to a folded non-propulsive position, in which one sidewall of the flap faces one sidewall of the main wingsail. In this way, different propulsive positions can be provided by the rotation of the flap in respect to the main wingsail, and in addition to the rotation of the whole wingsail frame. The angle of rotation of the flap center line, when the flap is rotated from the neutral position to the folded position, is suitably at least 90°, or at least 120° or at least 150° in relation to a normal line of the main wingsail centerline. Thus, according to the present solution the flap can be rotated more than is needed to provide a camber in a propulsive position and the flap can be folded towards the main wingsail by using only one axis of rotation.

The wingsail structure may further comprise a tilting arrangement configured to bring the wingsail frame from a standing folded position to a tilted position in respect to the foundation. The tilting angle may vary and can be for example be from 10-100°. Since the wingsail frame can be brought to a folded position before tilting the wingsail frame, stowing can be provided in a space-saving manner.

The wingsail frame may comprise at least one intermediate coupling member located along the longitudinal extension of the main wingsail and the flap between the upper and lower ends of the respective main wingsail and flap. In this way, the structural stability of the connection between the main wingsail and the flap can be improved.

Further, the present invention relates to a wind-assisted propulsion arrangement comprising at least one wingsail structure as defined above, and to a marine vessel comprising the wind-assisted propulsion arrangement.

### BRIEF DESCRIPTION OF THE DRAWINGS

Further features and advantages of the present invention will be described with reference to the appended drawings in which:
Fig. 1 illustrates a marine vessel comprising a wind-assisted propulsion arrangement in a standing unfolded propulsive position in a perspective view.
Fig. 2a and 2b illustrate an embodiment of a flap inclination arrangement in standing unfolded neutral position (I) from below.
Fig. 2c illustrates the embodiment of Fig. 2a and 2b from below in a standing propulsive position (II), in which the flap is inclined in the clockwise direction to the left in respect of the leading edge of the main wingsail.
Fig. 2d illustrates the embodiment of Fig. 2a and 2b from below in a standing propulsive position (II), in which the flap is inclined in the counterclockwise direction to the right in respect of the leading edge of the main wingsail.
Fig. 2e illustrates the embodiment of Fig. 2a and 2b from below in a standing folded position (III), in which the flap is inclined through a left curve towards the sidewall on the right-hand side in respect of the leading edge of the main wingsail.
Fig. 3 illustrates an embodiment of the second axis of rotation, which is provided with a rotary actuator.
Fig. 4a and 4b illustrate another embodiment of a flap inclination arrangement in standing unfolded neutral position (I) from below.
Fig. 4c illustrates the embodiment of Fig. 4a and 4b from below in a standing propulsive position (II), in which the flap is inclined towards left in respect of the leading edge of the main wingsail.
Fig. 4d illustrates the embodiment of Fig. 4a and 4b from below in a standing propulsive position (II), in which the flap is inclined towards right in respect of the leading edge of the main wingsail.
Fig. 4e illustrates the embodiment of Fig. 4a and 4b from below in a standing folded position (III), in which the flap is inclined through a left curve towards the sidewall on the right-hand side in respect of the leading edge of the main wingsail.
Fig. 5 illustrates a bottom end cover plates for the main wingsail and flap.
Fig. 6 illustrates a wingsail structure in a standing unfolded propulsive position in which the main wingsail and the flap are connected with intermediate coupling members located along the longitudinal extension of the main wingsail and the flap between the upper and lower ends of the respective main wingsail and flap in a perspective view.
Fig. 7 illustrates the wingsail structure of the wind-assisted propulsion arrangement in a folded and tilted horizontal position in a perspective view.

### DETAILED DESCRIPTION

In order to utilize wind as power for ship propulsion, the wingsails are formed so that they can in itself or together with an engine of the vessel generate sufficient propulsive forces to overcome the ship resistance forces. In this application, a wingsail is generally defined as a rigid or semi-rigid structure, which may be similar to an aircraft wing, and which can be fixed in vertical or axial direction on a marine vessel to provide propulsive force from the action of the wind. The construction, size, and number of wingsails is adapted to the vessel in question. Generally, the stronger the resistive forces, the larger the wingsails and/or the higher the number of wingsails is. When the rigid wingsails are not used, e.g. due to rough weather, limitation in height in the chosen route or during cargo operation, safety aspects should be ensured.

According to the present invention, a wingsail structure comprising a wingsail frame is provided. The wingsail frame comprises a main wingsail and an aft flap, which are connected by means of at least one coupling member. The wingsail frame is rotatably connected via a first longitudinal axis of rotation to a foundation. Each of the main wingsail and the aft has an airfoil shape. By airfoil shape is meant a cross-sectional shape of a wingsail whose motion through air is capable of generating a (significant) lift. The main wingsail and the aft comprise rigid or semi-rigid sidewalls extending between a top end and a bottom end and having a leading edge and a trailing edge. The main wingsail has a main cross-sectional centerline MCL and the aft flap has an aft flap cross-sectional centerline FCL, which centerlines extend between the respective leading and trailing edges, and as illustrated later down in the description with reference to the appended drawings. The flap is connected to the main wingsail via at least one coupling member.

In addition to the whole frame being rotatable around the first longitudinal axis of rotation, the flap is arranged individually rotatable around a second longitudinal axis of rotation. During the rotation, the flap centerline can be rotated in respect to the main wingsail centerline MCL from a neutral position (I), in which the flap centerline FCL is successively, i.e. one after another, aligned with the main wingsail centerline MCL to an inclined position. Thus, the flap and the centerline thereof can be rotated to a propulsive position, in which the flap centerline FCL is inclined in respect to the main wingsail centerline MCL. The angle of inclination can be determined in respect of a normal line, which is perpendicular to the main wingsail centerline MCL. When in neutral position, the flap centerline FCL is positioned perpendicular to the normal line. When inclined to the propulsive position, the flap is inclined in relation to and towards the normal line either in the counter-clockwise or clockwise direction in respect of the leading edge of the main wingsail. The flap can be thus inclined i.e. to the left or right in respect of the leading edge of the main wingsail. The angle of inclination in the propulsive position is less than 90° towards the normal line. The flap can also be rotated to a folded non-propulsive position, in which one sidewall of the flap faces one sidewall of the main wingsail. The angle of inclination when folding, is at least 90°, or at least 120° or at least 150° towards and past, i.e. in relation to, the normal line of the main wingsail centerline MCL.

According to the invention the second axis of rotation is arranged laterally offset of the main wingsail centerline MCL, when the wingsail frame is in the neutral position. The second axis of rotation may be connected to the at least one coupling member to provide a robust construction. In this way, when folding the flap onto the main wingsail, a more compact wingsail position can be obtained. At the same time, when in use, the flap can be inclined in respect of the main wingsail to provide a camber providing propulsive force. The main wingsail is not individually rotatable in respect of the flap centerline. Instead, the main wingsail rotates when the whole wingsail frame rotates. By providing a flap, which is rotatable in respect of the main wingsail around an axis which is offset, i.e. distanced, of the main wingsail centerline MCL and optionally also the flap centerline FCL, it is possible to use only one rotational axis for folding and inclining of the flap. This way, the flap can be inclined in different angles when sailing while the flap can be folded towards the main airfoil utilizing only one rotation point. This is a huge advantage, which simplifies the structure and the control of the wingsail structure. It also enables hinges or lever arms to be distributed vertically between the main and flap holding the flap towards main airfoil.

In addition of the folding function provided by the second axis of rotation, it is possible to adjust the amount of generated power by adjusting the camber formed by the main wingsail and a flap. Since the flap can be folded towards the main wingsail, a projected area of a wingsail frame can be reduced. Thus, also the space required by the wingsail frame is reduced on board a vessel. When the main wingsail and the flap are folded, the generated forces can be reduced. In this way, a minimum power configuration can be obtained in desired conditions, which may be important for vessel safety, structural integrity and operability.

To prevent propulsion provided by the wingsails, the wingsail frame can be tilted horizontally towards the deck to a tilted position. By "tilted" position is meant a position in which the wingsail frame is inclined towards a horizontal position and/or can lean towards a deck of the vessel or towards a support on the deck. The wingsail frame can be stowed in this position and the position is herein also referred to as a stowage position. In the tilted position and when the main wingsail and the flap are in a folded position, space can be saved on the deck of the vessel compared to the main wingsail and the flap not in a folded position. This is also illustrated in the appended drawings.

To provide the tilted position the wingsail frame is tilted from a vertical standing position towards a horizontal position. The wingsail frame has a longitudinal axis, which extends in a vertical direction in respect of the vessel deck when the wingsail frame is in a standing position. The wingsail frame is thus tilted in respect of the horizontal rotation axis, which is perpendicular to the longitudinal axis and thus essentially horizontal or transversal, in respect of the vessel deck. In the tilted position, the longitudinal axis of the wingsail frame can be thus essentially horizontal. However, tilted wingsails require large space on a deck of a marine vessel, which can be difficult to find. It is therefore essential to minimize the needed space as much as possible to enable installation of the wingsail arrangements,

The wingsail structure, which comprises the wingsail frame and a foundation, and an arrangement comprising one or more wingsail structures can be used in a marine, or maritime vessel, i.e. a vessel which is used as a means of transportation on water. The main wingsail and the flap are substantially made of a rigid or semi-rigid material and have an airfoil shape. Both the main wingsail and the flap have sidewalls, a leading edge and a trailing edge and a top end and a bottom end. Further, the main wingsail has a main cross-sectional centerline MCL and the aft flap has a flap cross-sectional centerline FCL, which centerlines extend between the respective leading and trailing edges.

By "rigid" material is meant a material, which may be a composition of several materials, that is not foldable and can support its own weight when rested upon parallel edges of such materials. "Semi-rigid" material is a material which is partly rigid and has some degree of flexibility but can still support its own weight when rested upon parallel edges of such materials.

By "airfoil" shape is in this application meant a wing profile having an aerodynamic shape when looked in a transverse section in the fore-to-aft direction, i.e. from a leading edge to a trailing edge direction. The aerodynamic airfoil shape is advantageous, since it lets the air to pass over wingsail more easily. The shape may be asymmetric in said direction, but it can involve symmetric sections, or the shape may be a symmetric airfoil. The airfoil shape may be for example defined according to NACA standardized series, but the shape is not limited thereto.

For better understanding of the invention of the present disclosure, it will now be described with reference to the appended drawings, which are provided to illustrate non-limiting example embodiments of the invention. It should be noted that in the drawings, all reference signs are not added to all drawings for the sake of clarity, but it will be apparent to the skilled person that a reference sign relating to a structural detail in one drawing is applicable in an analogous manner to other drawings showing the same detail.

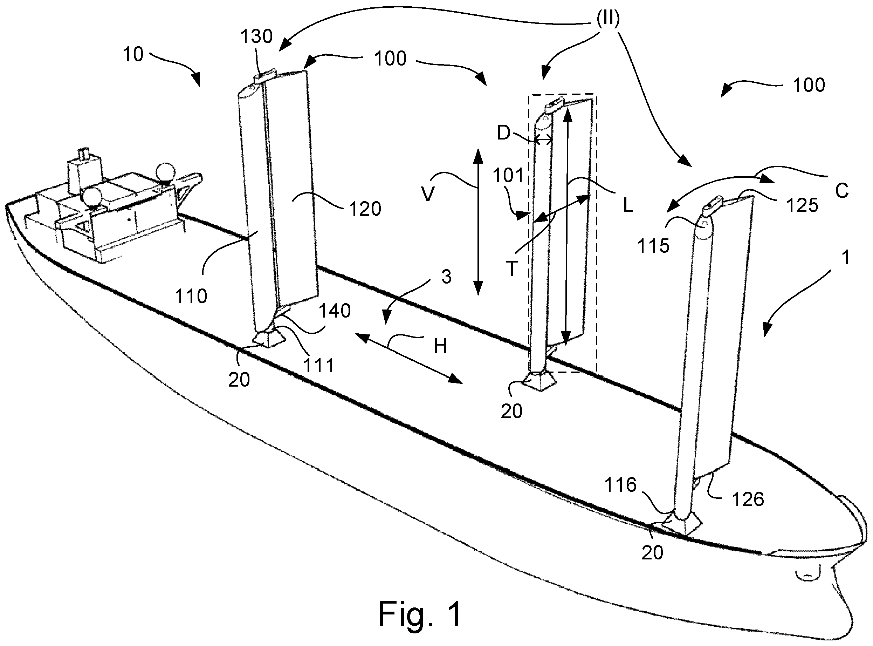

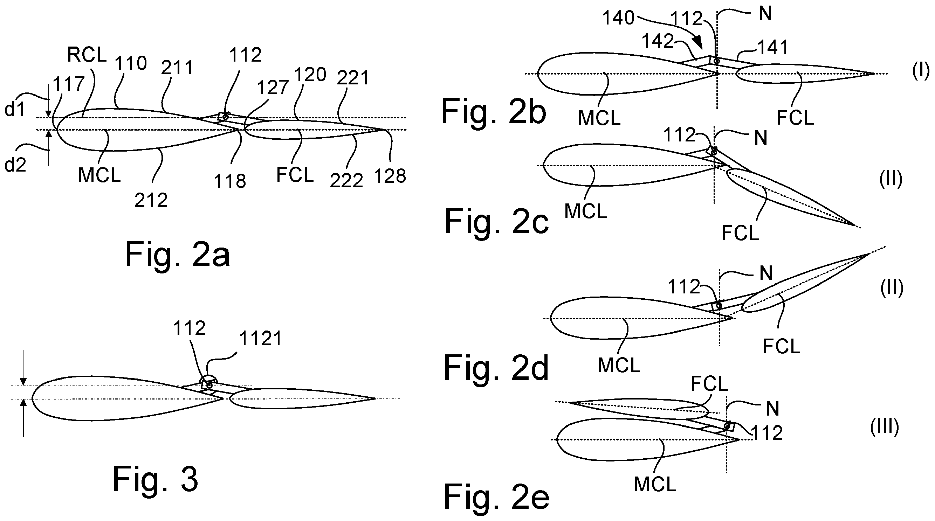

Referring to Fig. 1, a marine vessel 1 comprising a wind-assisted propulsion arrangement 10 with three wingsail structures 100 is shown. Each of the wingsail structures 100 comprises a wingsail frame 101, schematically shown in connection with the middle wingsail frame 101 by a rectangle with dotted lines in Fig. 1. The wingsail frame 101 comprises a main wingsail 110 and an aft flap 120 and at least one coupling member 140 connecting the main wingsail and the aft flap. Both the main wingsail 110 and a flap 120 are rigid or semi-rigid, meaning that there is a certain degree of flexibility. The wingsail frame is further shown from below in Fig. 2a to 2e, also referred to herein.

The wingsail structure 100 further comprises a foundation 20, which can be fixed to a deck 3, i.e. the body of the vessel 1. The wingsail frame 101 is rotatably connected via a first longitudinal axis of rotation 111 to the foundation 20. The first axis of rotation is configured to allow rotation of the whole wingsail frame in respect to the foundation 20. Thus, the main wingsail rotates when the whole wingsail frame rotates. The first longitudinal axis of rotation may be provided by any suitable means, e.g. a shaft detachably attached to foundation 20 or by a slewing ring, for example. The foundation 20 is further associated with the wingsail frame 101 such that it supports the frame when the wingsail frame is in an upright, vertical standing position, either in a neutral non-propulsive position (I) or in a propulsive position (II), in which the flap is inclined in respect to the main wingsail centerline MCL or in the folded position (III). The foundation may also be associated with the wingsail frame when it is brought to a tilted position (IV).

In the unfolded standing position illustrated in Fig. 1, the wingsail frame is arranged in a standing, propulsive position (II). The propulsive force provided by the main wingsail, and the flap can be varied by altering the camber, i.e. the convexity of the curve of the main wingsail and the flap form from the leading edge of the main wingsail to the trailing edge of the flap, as schematically illustrated by the camber curve C in connection with the foremost wingsail frame in Fig. 1. The convexity can be adjusted by adjusting the inclination of the flap in respect of the main wingsail, as shown in Fig. 2a-2d. In the standing position, the longitudinal axis L of the wingsail structure (shown only in connection with one structure 100) is essentially parallel with a general vertical axis V, which is perpendicular to a horizontal axis H of the vessel 1. The horizontal axis H can extend substantially in the same direction as the deck floor. The wingsail structure also has an extension in a depth direction D, which is perpendicular to the plane formed by the two-dimensional longitudinal L and transversal T directions. The extension of the wingsail frame 101 decreases in the transversal direction T and increases in the depth direction D, when the flap is folded towards the main wingsail.

Both the main wingsail 110 and the flap 120 have an airfoil shape. The main wingsail 110 has a leading edge 117, a trailing edge 118 (Fig. 2a), a top end 115 and a bottom end 116 (Fig. 1), and side walls 211 and 212 extending therebetween (Fig. 2a). In a similar way, the flap 120 has a leading edge 127 and a trailing edge 128 (Fig. 2a) and a top end 125 and a bottom end 126 (Fig. 1), and side walls 221 and 222 extending therebetween (Fig. 2a). The shape of the airfoil has generally a tapering shape from the leading edge towards the trailing edge.

The side walls 221 and 222 are integrated to form the airfoil shape with the leading edge 127 and the trailing edge 128. The side walls 221 and 222 may be formed of modules attached to each other permanently or detachably and the modules together form the integrated wingsail or flap with the airfoil shape. The wingsail and flap profiles can be designed in different modular elements which can be combined to achieve different size of wing sails. The main wingsail and the flap may comprise any suitable material, such as a moldable polymeric material, glass fiber material, carbon fiber material and/or a composite material, but is not limited thereto.

The wingsail frame 101 further comprises at least one coupling member 140, which in the illustrated example of Fig. 1 is a lower coupling member placed in association with the bottom end 116 of the main wingsail 110 and the bottom end 126 of the flap 120. The wingsail frame may additionally or alternative comprise an upper coupling member 130 associated with the top end 115 of the main wingsail 110 and the top end 125 of the flap 120. The coupling members 130, 140 may have a similar construction both on the top and the bottom, or the construction may be different from each other The coupling members 130, 140 are configured to connect the main wingsail 110 and the aft flap 120.

According to the present invention, the flap 120 is rotatable around a second longitudinal axis of rotation 112 to bring the flap into an inclined position in respect of the main wingsail centerline MCL. This way, the flap can be inclined in different angles when sailing and it can be folded towards the main airfoil utilizing only one rotation point. This simplifies the structure and the control of the wingsail structure, which is a huge advantage compared to known solutions. Fig. 2a-2e illustrate the second longitudinal axis of rotation 112, which in the shown example is connected to the at least one coupling member 140 and is arranged laterally offset of the main wingsail centerline MCL and also the flap centerline FCL. This is illustrated in Fig. 2a, in which a rotation axis centerline RCL, is aligned with the main wingsail centerline MCL and the flap centerline FCL. There is a lateral distance between the rotation axis centerline RCL and the main wingsail centerline MCL, as shown by the arrows d1 and d2.

The coupling member 140 may comprise a first boom member 141, which is connected to the flap 120. The first boom member 141 may comprise a bar, which is fixed to the flap 120 in a non-rotatable manner. The coupling member 140 may comprise a second boom member 142, which is connected to the main wingsail 110. The second boom member 142 may comprise a bar, which is fixed to the main wingsail 110 in a non-rotatable manner. The first boom member 141 and second boom member 142 can then be connected to each other via the second axis of rotation 112, which provides a hinged connection. Thus, the coupling member 140 rotatably connects the main wingsail 110 and the flap 120 via the second axis of rotation 112 in respect to each other. By rotatably connected is meant that the flap 120 can be rotated around the second longitudinal axis 112 to bring the flap towards the main wingsail such that the flap centerline FCL is rotated in respect to the main wingsail centerline MCL. The longitudinal axis is parallel to the vertical axis L, when the wingsail frame is in a standing position, e.g. in the propulsive position.

The rotation of the flap is illustrated in Fig. 2c-2e. In the Fig. 2b-2e the flap 120 and main wingsail 110 centerlines FCL and MCL are illustrated with dotted lines. A normal line N of the main wingsail centerline MCL, i.e. a line that is perpendicular to the main wingsail centerline MCL, is also illustrated and drawn through the second axis of rotation 112. The inclination of the flap can be illustrated as rotation of the flap center line FCL in respect to the normal line N. When the flap 120 is inclined to a propulsive position to form a camber C with the main wingsail 110, the flap centerline FCL is inclined towards the normal line N. The angle of inclination is suitably less than 90° from the neutral position towards the normal line N. The inclination can be either towards the left or right in respect of the leading edge 117 (see Fig. 2a) of the main wingsail. This is illustrated in Fig. 2c and 2d. Thus, the inclination can be done towards any one of the side walls 211, 212 of the main wingsail 110. When the flap is folded to a folded position and rotated from the neutral position (I) to the folded position (III), the angle of inclination is at least 90°, or at least 120° or at least 150° towards and passing over the normal line N of the main wingsail centerline MCL, as illustrated in Fig. 2e. In this way the wingsail can be stowed in a compact manner.

The rotation of the flap 120 can be actuated in different ways. Fig. 3 shows an example of a rotation arrangement comprising a rotating actuator 1121. The actuator can be used to rotate the flap 120 around the second axis of rotation 112 in respect of the main wingsail 110. The actuator may be driven for example by means of an electric or hydraulic motor.

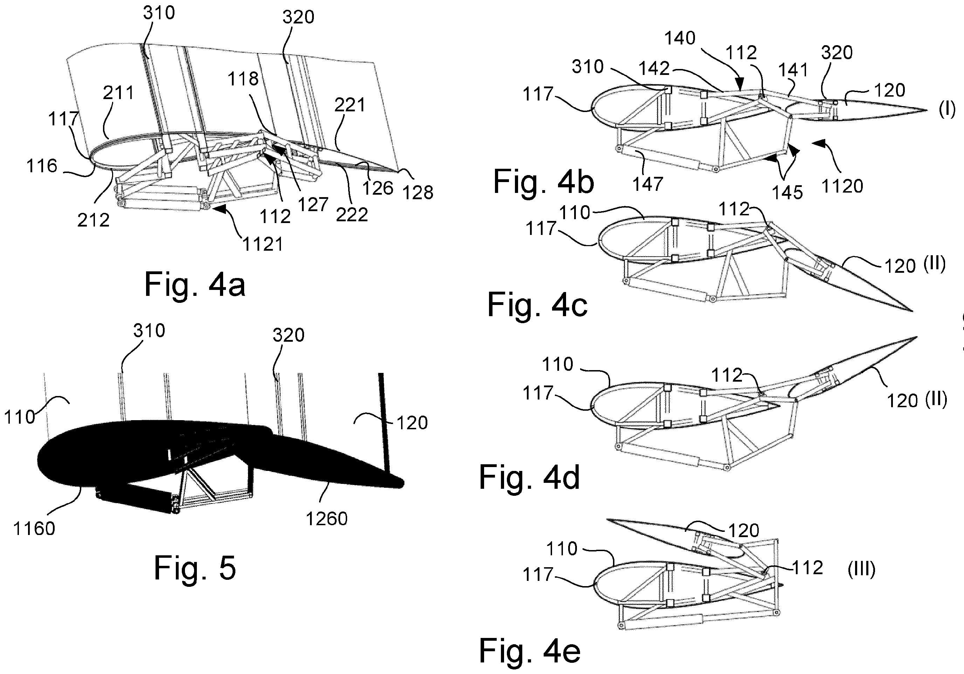

Fig. 4a-4e show a further example of a rotation arrangement 1121 to rotate the flap 120 in respect of the main wingsail 110. Fig. 4a-4e additionally show that the wingsail frame further comprises a longitudinally along the length of the respective main wingsail and aft flap extending supporting frame 310, 320. A main wingsail supporting frame 310 is arranged inside the main wingsail 110 and a flap supporting frame 310 is arranged inside the flap 120. Each of the supporting frames 310, 320 has a hollow structure and is connected to an inner surface of the side wall 211, 212, 221, 222 of the respective main wingsail 110 and the flap 120. The purpose of the frame structure is to provide support for the wingsail and thereby provide a robust construction. The frame structure may be provided in modules or as a one-piece construction. The frame construction has a hollow structure and is connected to an inner surface of the side wall of the respective main wingsail and the flap and has dimensions so that it can be fitted inside the respective main wingsail and the flap.

The rotation arrangement 1120 is associated with the at least one lower coupling member 140, which in the illustration is associated with the bottom end 116 of the main wingsail 110 and the bottom end 126 of the flap 120. In a similar way as explained in connection with Fig. 2a-2e, the coupling member 140 can be additionally or alternatively located at the top end 115 of the main wingsail or top end 125 of the flap 120. As is illustrated in Fig. 4b with reference signs (which apply analogously to all figures 4a-4e), the coupling member 140 comprises a first boom member 141. The first boom member 141 of the coupling member 140 is rigidly connected, i.e. in a non-rotatable manner, to the flap 120 via a flap frame structure 320. The flap frame structure 320 extends a certain length outside the extension of the side walls 221, 222 of the flap 120 to provide a robust construction. The coupling member 140 comprises a second boom member 142, which is connected to the main wingsail frame structure 310 of the main wingsail 110 in a rigid and non-rotatable manner. The second boom member are connected to the first boom member via the second axis of rotation 112 providing a hinged connection. The coupling member, which is connected to the flap and the main wingsail, is configured to rotate the flap 120 in respect to the main wingsail 110 by means of movable lever arms 145, which are movably fixed to the first and second boom members 141, 142. The number of movable lever arms in the illustrated example is 2 but could be more than that or only 1. The movable lever arms 145 are driven by means of at least one linear actuator or motor 147.

Fig. 4b-4e show an embodiment of the coupling member configured to rotate the flap in respect of the main wingsail. In the Fig. 4b-4e the flap 120 and main wingsail 110 comprise centerlines FCL and MCL analogously as in connection with Fig 2a-2e, but are not illustrated in detail for clarity. A normal line N of the main wingsail centerline MCL is also present, but not illustrated. The inclination can be either towards the left as in Fig. 4c or towards the right in respect of the leading edge 117 (see Fig. 4d) of the main wingsail. Thus, the inclination can be done towards any one of the side walls 211, 212 of the main wingsail 110. When the flap is folded to a folded position in Fig. 4e and rotated from the neutral position (I) of Fig. 4b to the folded position (III) of Fig. 4e, the angle of inclination is at least 90°, or at least 120° or at least 150° towards and passing over, i.e. in relation to the normal line N of the main wingsail centerline MCL, in a similar way as illustrated in Fig. 2e. In this way the wingsail can be stowed in a compact manner.

Fig. 5 shows an embodiment of the wingsail frame in which the main wingsail 110 bottom end 116 comprises a bottom end cover plate 1160. The top end 115 could in a similar manner comprise a top end cover plate (not shown). The bottom end cover plate 1160 has an outer periphery extending at least partially over the periphery of the main wingsail formed by the sidewalls 211, 212 of the main wingsail 110 and the flap 120. In a similar manner, the flap 120 may comprise a bottom end cover plate 1260.

The bottom end plates 1160, 1260, which have a larger periphery than the periphery of the main wingsail and the flap defined by the respective sidewalls, provide for control of the air flow and prevent turbulence. According to variant, the second axis of rotation 112 may be connected to the bottom end plate and/or the top end plate. It can be located laterally outside of an area defined by the sidewalls of the main wingsail and the flap. The supporting frames 310 and 320 of the main wingsail and the flap can be arranged connected with the respective bottom end plates 1160 and 1260.

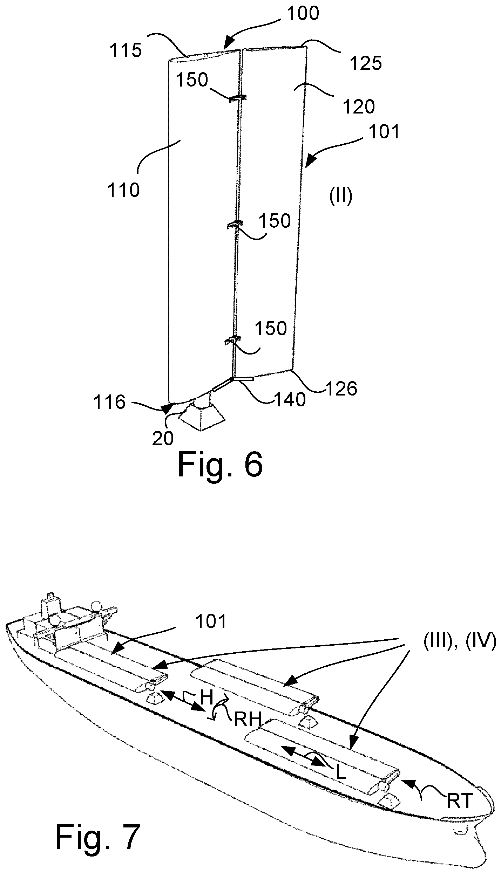

Fig. 6 illustrates a further embodiment of the present invention. In addition to the lower coupling member 140, the wingsail comprises at least one, in the illustrated example 3, intermediate coupling 150 members located along the longitudinal extension of the main wingsail 110 and the flap 120 between the upper ends 115, 125 and lower ends 116, 126 of the respective main wingsail 110 and flap 120. This further improves the robustness of the structure.

The wingsail structure 100 further comprises a tilting arrangement (not shown), which is configured to bring the wingsail frame from the folded standing position (III) to a tilted position (IV) in respect to the foundation 20. Fig. 7 shows the wingsail frames in a tilted stowage position. The wingsail frames can be tilted into a substantially horizontal position, in which the sidewall between the leading and trailing edges faces the deck of the vessel. Alternatively, the wingsail frames could be tilted to a vertical position, in which the leading or trailing edge faces the deck of the vessel. However, the tilting angle may vary, and can be for example from 10-100°, in respect of the deck of the vessel, more commonly up to 90°, which corresponds a substantially horizontal position in respect of the deck. To provide the tilted position, the wingsail frame 101 having the longitudinal axis L extending in a vertical direction V when the wingsail frame is in a standing position, is tilted around a transversal rotation axis. The transversal rotation axis RT is perpendicular to the longitudinal axis L and thus essentially horizontal. The arrow RT illustrates the direction of the tilting in respect of the rotation axis. In the tilted position, the longitudinal axis L of the wingsail frame can thus be essentially parallel with the horizontal axis H or nearly parallel. Alternatively, the tilting angle may be less than 90° and the longitudinal axis L can correspondingly be inclined at an angle less than 90° in respect to the horizontal axis. Further, the wingsail frame 101 may be inclined in the horizontal plane, as illustrated by the arrow RH. In this way the wingsail frames may be also arranged inclined in respect to each other when they are in the tilted position. This may facilitate the stowing of the wingsail frames. The tilting can be obtained by a tilting arrangement comprised in the wingsail structure 100.

Generally, the main wingsail, the flap and the upper and lower coupling means may comprise suitable arrangement configured to provide the rotating movement in respect of the rotation axes, and may comprise e.g. shafts, bearings e.g. roller bearings and drive means. The rotation of the wingsail frame, main wingsail and/or the flap can be controlled by incorporating e.g. electrically controllable means to each rotation axis. A control unit can then be connected to the drive arrangement to regulate the rotation of the wingsail frame, main wingsail and/or the flap. The degree of rotation of the wingsail frame, main wingsail and/or the flap is adapted to prevailing surrounding conditions. The rotating arrangement and each of the vertical rotation axes for the main wingsail and flap can be arranged with stop means so that the degree of rotation is angularly limited to a certain degree. By limiting the rotation degree, uncontrolled rotation of the parts of the wingsail frame can be avoided, for example in case of change in the prevailing wind/weather conditions.

The wind-assisted propulsion arrangement 10 may be operated according to a method comprising the steps of:
- controlling a degree of rotation of the wingsail frame 101 and/or the flap 120 from a neutral position (I) to a propulsive position (II) to provide a camber;
- folding the flap towards the main wingsail to provide a folded standing position (III)
- tilting the wingsail frame (101) towards the body of the vessel to provide a tilted position (IV).

The detailed description and the drawings are aimed to facilitate the understanding of the embodiments of the inventions, but do not limit the scope of the invention. The scope is limited by the appended claims.

## Claims

1. A wingsail structure (100) for wind-assisted propulsion of a marine vessel (1), the wingsail structure (100) comprising a wingsail frame (101), which is rotatably connected via a first longitudinal axis of rotation (111) to a foundation (20), wherein the wingsail frame (101) comprises:
• a main wingsail (110) and an aft flap (120), each having an airfoil shape and comprising rigid or semi-rigid sidewalls (211, 212; 221, 222) extending between a top end (115; 125) and a bottom end (116; 126) and having a leading edge (117; 127) and a trailing edge (118; 128), wherein the main wingsail (110) has a main wingsail centerline (MCL) and the aft flap has a flap centerline (FCL), which centerlines extend in a cross-sectional view between the respective leading edges (117; 127)and trailing edges (118; 128),
• at least one coupling member (140) connecting the main wingsail (110) and the aft flap (120), wherein
the flap (120) is arranged rotatable around a second longitudinal axis of rotation (112) to bring the flap and the flap centerline (FCL) thereof to an inclined position in respect of the main wingsail centerline (MCL), and wherein
the second axis of rotation (112) is arranged laterally offset of the main wingsail centerline (MCL).

2. The wingsail structure (100) according to claim 1, wherein the second axis of rotation (112) is connected to the at least one coupling member (140).

3. The wingsail structure (100) according to claim 1 or 2, wherein each of the main wingsail (110) and the aft flap (120) further comprises a longitudinally along the length of the respective main wingsail and aft flap extending supporting frame (310; 320) arranged inside the respective main wingsail (110) and flap (120).

4. The wingsail structure (100) according to claim 3, wherein each of the supporting frames (310, 320) has a hollow structure and is connected to an inner surface of the side wall (211, 212; 221, 222) of the respective main wingsail (110) and the flap (120).

5. The wingsail structure of claim 3 or 4, wherein the at least one coupling member is fixed to the respective frame structure (310; 320) of the main wingsail (110) and the flap (120).

6. The wingsail structure according to any of the preceding claims, wherein the at least one coupling member (140) is associated with the respective bottom end (116; 126) and/or top end (115; 125) of the main wingsail (110) and the flap (120), and comprises a first boom member (141), which is connected to the flap (120), and a second boom member (142), which is connected to the main wingsail (110), and wherein the first boom member (141) and second boom member (142) are connected to each other via the second axis of rotation (112).

7. The wingsail structure according to claim 6, wherein the first boom member (141) and the second boom member (142) are fixed to the respective frame structure (320; 310) of the flap (120) and the main wingsail (110) in a non-rotatable manner.

8. The wingsail structure of any of claims 6 or 7, wherein the flap (120) is configured to be rotatable in respect to the main wingsail (110) by means of movable lever arms (145) movably fixed to the first and second boom members (141; 142), and wherein the movable lever arms (145) are driven by means of at least one linear actuator (147) or motor.

9. The wingsail structure (100) according to claim to any one of the preceding claims, wherein each of the bottom end and/or the top end of the main wingsail and the flap comprises a respective bottom end cover plate (1160; 1260) and/or top end cover plate having an outer periphery extending at least partially over the periphery of the sidewalls (211, 212; 221, 222) of the respective main wingsail (110) and the flap (120).

10. The wingsail structure (100) according to claim 9, wherein the second axis of rotation (112) is connected to the bottom end cover plate (1160) and/or the top end cover plate of the main wingsail (110) and is located laterally outside of an area defined by the sidewalls of the main wingsail and the flap.

11. The wingsail structure (100) according to any one of the preceding claims, wherein the flap is configured to be inclined:
- to a neutral position (I), in which the flap centerline (FCL) is aligned with the main wingsail centerline (MCL)
- to a propulsive position (II), in which the flap centerline (FCL) is inclined in respect to the main wingsail centerline (MCL), and/or
- to a folded non-propulsive position (III), in which one sidewall of the flap faces one sidewall of the main wingsail.

12. The wingsail structure (100) according to claim 11, wherein the angle of rotation of the flap center line (FCL), when the flap is rotated from the neutral position (I) to the folded position (III), is at least 90°, or at least 120° or at least 150° in relation to a normal (N) line in respect of the main wingsail centerline (MCL).

13. The wingsail structure (100) according to any one of the preceding claims, wherein the wingsail structure (101) further comprises a tilting arrangement (300) configured to bring the wingsail frame (101) from a standing folded position (III) to a tilted position (IV) in respect to the foundation.

14. A wingsail structure (100) according to any one of the preceding claims, wherein the wingsail frame (101) comprises at least one intermediate coupling member (150) located along the longitudinal extension of the main wingsail (110) and the flap (120) between the upper (115; 125) and lower ends (116; 126) of the respective main wingsail and flap.

15. A wind-assisted propulsion arrangement (10) comprising at least one wingsail structure (100) according to any one of the preceding claims 1-14.

16. A marine vessel (1) comprising the wind-assisted propulsion arrangement (10) according to claim 15.
